Europäisches Patentamt

European Patent Office

Office européen des brevets

(19)

(11) Publication number: **0 145 367**
**A2**

# EUROPEAN PATENT APPLICATION

(21) Application number: **84308045.8**

(22) Date of filing: **20.11.84**

(51) Int. Cl.⁴: **A 21 D 6/00**

(30) Priority: **21.11.83 US 553735**

(43) Date of publication of application: **19.06.85**
**Bulletin 85/25**

(84) Designated Contracting States: **AT BE CH DE FR GB IT LI LU NL SE**

(71) Applicant: **GENERAL FOODS CORPORATION, 250 North Street, White Plains, N.Y. 10625 (US)**

(72) Inventor: **Benjamin, Earl James, 150, Beechmont Drive, New Rochelle New York 10804 (US)**
Inventor: **Ke, Charles I., 1339, Rustic View Drive, Manchester Missouri 63011 (US)**
Inventor: **Cochran, Stuart Allan, 1678, Old Trenton Road, Robinsville New Jersey 08691 (US)**
Inventor: **Hynson, Richard, 8, Dogwood Lane, Skillman New Jersey 08558 (US)**
Inventor: **Veach, Susan Kay, 212 South Main, Hightstown New Jersey (US)**
Inventor: **Simons, John I., 7-15 Avon Drive, East Windsor New Jersey (US)**

(74) Representative: **Baillie, Iain Cameron et al, c/o Ladas & Parry Isartorplatz 5, D-8000 München 2 (DE)**

(54) Process for making yeast-leavened frozen laminated and/or sweet pastry dough.

(57) Yeast-containing pastry dough is fermented, sheeted, formed into a desired shape, proofed and slowly frozen. The resulting frozen product is freeze-storage stable and capable of being removed from the freezer and baked without an intervening proofing step. The proofed and frozen pastry doughs of the invention are able to produce fresh baked pastries having excellent aroma, flavor and texture with a minimum amount of preparation time.

EP 0 145 367 A2

ACTORUM AG

3262

# DESCRIPTION

## PROCESS FOR MAKING YEAST-LEAVENED
## FROZEN, LAMINATED AND/OR SWEET PASTRY DOUGH

### TECHNICAL FIELD

The present invention relates to a method for producing yeast-leavened, frozen, laminated and/or sweet pastry products which may be removed from the freezer and baked without the necessity of having to undergo further proofing or leavening.

Presently-available, yeast-containing, frozen pastry products are either fully-leavened and baked before freezing or else frozen before any significant leavening or baking has occurred. In the former case, the user of the frozen product merely reheats the frozen pastry prior to sale and/or serving to the consumer; however, these products can neither be called freshly-baked nor do they possess the flavor, texture and aroma of freshly-baked yeast-leavened pastries. In the latter case, the frozen pastry must undergo rather lengthy thawing and proofing steps prior to being subjected to elevated baking temperatures. This thawing and proofing cycle is not only time-consuming, which is costly to a commercial baker, but also involves an amount of skill and judgment on the part of the baker so that only properly proofed pastries are placed in the oven.

Commercially-available unproofed frozen doughs are totally dependent upon the viability of the yeast contained within the frozen dough to obtain proofing/leavening. It has been established, however, that yeast viability decreases in proportion to the time of frozen storage. To overcome the problem of yeast kill, which becomes more dramatic if significant fermentation is permitted to take place prior to freezing the dough, it is conventional to virtually eliminate fermentation activity prior to freezing. Such a process is set forth in an article entitled "Frozen Bread Dough", The Bakers Digest, Volume 42, No. 5 at pages 44-50 (October 1968). It is also known in the art to add a surplus quantity of yeast to the dough in order to account for the effect of yeast kill during frozen storage. It remains a problem however to be able to obtain consistent proofing of frozen doughs after thawing.

It would be desirable if frozen, unbaked pastry products were available which could be taken directly from the freezer and fully baked in an oven within a relatively short time period (e.g., less than one hour) without having to be held at room temperature for several hours in order to effect additional yeast activity. Such frozen product would enable a commercial, retail baker to quickly respond to sudden increases in demand for freshly baked pastries. The bakery would then not be faced with having excess baked pastries which were fully prepared to meet a consumer demand which did not materialize. Nor would the bakery find itself out of freshly baked pastries and not be able to respond to unexpectedly high demand. It would also be desirable to eliminate the need for having a skilled baker or a proofing cabinet on location in order to prepare fresh-baked, yeast-leavened pastries which possess good flavor, texture and aroma. Such frozen products would also be of great benefit to the home consumer as well as the hotel and restaurant trade as any of the users would be able, on relatively short notice and in essentially a fool-proof manner, to prepare freshly-baked, laminated and/or sweet baked goods.

The frozen doughs of the present invention are not dependent upon yeast activity or viability after freezing. According to the present invention any rise in the dough which occurs after freezing, such as the oven spring which occurs during baking, is due to expansion of carbon dioxide or other gases already contained within the dough. The proofed, frozen doughs of this invention are able to expand and set in the expanded form during the baking cycle due to the fact that the dough, as a result of the gluten conditioning which occurs during the proofing step, possesses proper elasticity.

It is well-known in the art that the viability of yeast contained in frozen doughs decreases in proportion to the length of frozen storage. This fact is noted by Kline and Sugihara, The Bakers Digest, 44:5, October, 1968, pages 44-50 where it is also stated that fermentation should be virtually eliminated prior to freezing since dormant yeast is less vulnerable than yeast which has reached a state of incipient growth. Other prior art references such as U.S. Patent Nos. 3,375,107 to Schemmer and 3,894,155 to Ono et al. are in accord. The susceptibility to yeast-kill of commercially available, unproofed frozen doughs is often apparent when the doughs on occassion, lose the ability to adequately proof after three months of frozen storage. As the proofed frozen doughs of the present invention do not require any post-freezing yeast viability, the doughs will exhibit a higher degree of frozen storage stability.

## DESCRIPTION OF THE INVENTION

This invention relates broadly to the production of proofed and frozen, yeast-leavened pastry products which can be removed from the freezer and, without an intervening proofing step, be placed in an oven, which is either set to reach a baking temperature of at least 275°F or already preheated to such baking temperature, and thereafter fully baked. The baking period will obviously depend upon the size of the pastry product being baked with small items such as croissants, typically being baked at 350° to 450°F within 25 minutes and large items such as 20-ounce danish rings, typically being baked at about 350°F within 60 minutes.

According to the invention, the term pastry is meant to include non-bread items such as croissants, danish pastries and sweet rolls, all of which are prepared by one or more sheetings of a fermented dough which dough is thereafter cut and formed into the desired shape. Further according to this invention, the shaped dough pieces are at least partially proofed and then frozen. The dough formulation employed in the present invention will vary among themselves depending upon the type of pastry product being prepared. The proofed doughs will, however, contain a fat level of from 15% to 65%, whole egg (liquid) of from 5% to 25%, non-fat milk solids of from 4% to 12% and a sugar level of from 3% to 25%. Unless otherwise noted, all percentages refer to baker's weight precents wherein the weight of each non-flour ingredient contained in the dough is expressed as a weight percent of the flour ingredient of the dough.

The flour employed in the process of this invention will be a wheat flour which has a protein content of less than 16% protein by weight and will typically be from 11.5% to 14.5% by weight protein. Such flour may be obtained from hard red winter and hard red spring wheats which may be blended or air classified in order to obtain a flour having the desired protein level.

The fat ingredient which may include such materials as butter, margarine and/or vegetable shortening may be included as a component of the base dough formulation (i.e., the dough prepared prior to any sheeting operation) and/or as a roll-in ingredient (coated onto a sheeted dough in one or more separate operations). Regular sweet doughs such as used in the production of sweet rolls and coffee cakes will contain from 15% to 25% of fat in the dough itself with little or no fat present as a roll-in. Roll-in sweet doughs, such as Danish pastry, will normally contain from 5% to 20% fat in the dough itself and an additional 15% to 50% fat present as a roll-in ingredient. Sweet doughs, both regular and roll-in, will typically contain a sugar level in the dough itself which is at least about as great as the fat level in the dough itself. Pastry doughs, which are used in the production of such non-sweet, laminated pastry products as croissants and short pastry will typically have a fat content of from 40 to 60%, with essentially all of this fat being present as a roll-in component.

According to the process of this invention, the various doughs described above are prepared utilizing either the straight dough, including short time processes, or the sponge dough procedures which are commonly employed by skilled bakers. The straight dough process mixes all of the dough ingredients together (except roll-in ingredients) and then ferments the dough for a short period, typically from 30 to 120 minutes at a temperature between 65° to 90°F (18° to 32°C). Usually in the straight dough process the fat and dough additives are mixed or churned at slow speeds followed by the addition of an aqueous yeast solution, flour and the balance of the water. In the straight dough process, the order in which the various ingredients are added to the mixer can be varied considerably.

In the sponge dough process, the major fermentation action takes place in a pre-ferment in which water, yeast and a portion of the flour are fermented for several (3 to 5) hours and the resulting sponge is then combined with the remaining dough ingredients. The dough is then subjected to a second ferment for a period of from ten minutes up to about one hour at from 65° to 90°F (18 to 32°C).

The fermented pastry doughs are sheeted to a thickness of from 2 to 10 millimeters and any desired roll-in fat ingredient may be coated onto the dough surface. The roll-in and laminating procedures suitable for use in this invention may be any of those known and employed in the baking industry and can and will vary depending on the equipment available and the desired end product. According to one such process, the roll-in is coated across two-thirds of the dough sheet and then the uncoated portion of the sheet is folded onto the central third of the sheet followed by folding the remaining coated-third of the sheet on top of the uncoated surface. In this manner, a laminate of three dough layers separated by two fat layers is formed. Should additional laminations be desired in the final product, successive sheeting roll-in coating and folding cycles may be repeated. Usually a resting period of at least 15 minutes, preferably at a temperature of between 35° and 42°F (1.7° to 5.5°C) is included between each cycle so that the dough may be more readily handled. A final sheeting step, which may occur after a prolonged (e.g., 4 to 12 hours) refrigerated rest period, will usually be effected in the production of laminated pastry products such as danish and croissants.

The sheeted doughs of the invention will be cut into a desired form and rolled or folded into the shape of the pastry product intended. Fruit fillings, cinnamon, nuts and/or fruit pieces may be added into the pastry product either before or after shaping the pastry product. Of course, it would be possible to add these types of ingredients onto the shaped pastry product immediately before baking. The shaped pastry dough is then subjected to a proofing step wherein it is held at a temperature of from 80° to 105°F and a relative humidity of at least 60% for a period of at least 20 minutes.

It is also within the scope of this invention to include chemical leavening agents within the dough formulation. These agents may be non-heat activated leavening agents, such as, sodium bicarbonate in combination with various tartrate, pyrophosphate or orthophosphate salts, such that the proofing which is effected prior to freezing is a result of a combination of yeast and chemical generation of carbon dioxide. Alternatively or additionally these agents may be heat-activated leavening agents, such as ammonium bicarbonate and ammonium carbonate, which would provide increased oven spring during the baking cycle.

The proofing time, when combined with the time the dough or dough ingredients have undergone fermentation (i.e., held at a temperature in excess of 42°F), will usually be greater than two hours. The proofing time must be long enough to permit the dough to achieve a volume increase of from at least 55% to less than 200% over the volume of the shaped unproofed pastry dough. This degree of proof is required in order to obtain a frozen, proofed pastry product which will have good storage stability, and an ability to achieve a controlled positive oven spring, even when baked directly from a frozen state. If the proofing step is extended to a point where more than a 200% volume increase is obtained, the proofed dough is excessively weak and subject to: collapse during handling in the plant, either before freezing or during freezing; shrinkage of the frozen proofed dough during prolonged storage; and/or failure of the dough to rise in the oven during baking. If the proofing step does not effect a volume increase of at least 55%, the baked product will have a structure which is irregular or shredded in appearance and/or the baked product will likely be too dense.

The extent of proofing may also be characterized by the specific volume achieved by the frozen, proofed dough. Specific volume measurement would, of course, be made on sections of the proofed dough which do not contain added materials such as fruit and nuts and which also is free of voids which result from any rolling or folding operation. For regular sweet doughs, the required specific volume ranges from about 1.43 to 2.17 cc/gram. For roll-in sweet doughs, the specific volume range is from about 1.26 to 2.72 cc/gram and for non-sweet, laminated pastry doughs the specific volume range is about 1.82 to 3.57 cc/gram.

As will be appreciated by those skilled in the art, the richness of the dough will be inversely related to the specific volume of the dough due to the weight of added ingredients. Richness is a term of art which refers to the level of non-flour ingredients such as sugar, fat and egg components, contained in the dough, with richer doughs having a higher level of these ingredients.

It is important that freezing of the proofed pastry be accomplished at a relatively slow rate. The conventional cryogenic freezing methods used for the preparation of unproofed, frozen doughs is not suitable for use in this invention. This results from the fact that the delicate nature of the proofed dough is such that too rapid of a freezing can cause collapse of the extended gluten film. Furthermore, since the yeast cells are in a rapid growth state they are highly sensitive to rupture as a result of rapid freezing. Any rupturing of yeast cells will cause the release of glutathione which can lead to undesirable surface mottling of the baked product. The exact time of freezing will, of course, be dependent upon the size of the pastry product; however, the pastry should be frozen from ambient room temperature to a core temperature of 30°F (-1.1°C) in a time period which is greater than thirty minutes. Ambient temperature within the freezer must not be lower than -40°F (-40°C) and will typically be within the range of -10°F (-17.7°C) to -40°F. The core temperature of the dough will normally be reduced to 10°F (-12.2°C) within about 2 hours after which the dough may be placed into frozen storage where further reduction in temperature can be effected.

The frozen pastry products of this invention may be stored for prolonged periods of time in commercial and/or home food freezers having a temperature greater than -40°F (-40°C) and typically between about -5°F (-20.6°C) and +15°F (-9.4°C). Temperatures below -40°F (-40°C) should be avoided as yeast rupture and freeze dehydration can result.

The frozen products may be removed from a food freezer and placed directly into a preheated electric or gas oven or alternatively into an oven which is turned on and set to baking temperature (i.e., cold oven) without any intervening, thawing or proofing step. It is within the scope of this invention to permit some thawing of the proofed frozen dough to occur before placing the dough into the oven. Such a thawing step would more readily permit expansion or oven spring to occur during the baking cycle as the dough structure is softer and more able to rise in the oven due to the bubbles of gas (e.g, carbon dioxide) entrapped within the proofed dough expanding as the gas is heated to baking temperature. Such thaw periods could extend up to about four hours but more typically would be less than one or two hours. The frozen yeast would not become active (i.e.,

generate additional $CO_2$) during these relatively short thaw periods.    The time and temperature for baking the frozen pastry product will depend upon the type and size of the product.  Normally baking temperature will be from 165° to 235°C and the baking time will be less than 45 minutes, typically from 20 to 40 minutes.

During the baking cycle the frozen pastry product thaws, rises and bakes in a manner not heretofore thought possible for frozen pastry doughs. Although it has previously been shown that bread doughs might be proofed and frozen and thereafter baked without an intervening proofing step, it was not expected that a sugar- and/or fat-ladened, sheeted pastry dough would be capable of forming a proofed and frozen pastry product which could be baked immediately from the freezer without an intervening proofing step.  As will be recognized by those skilled in the art, pastry dough, because of its richer dough formulation and/or the use of flours having lower protein content, will have a gluten content considerably less than that of bread dough and will not readily proof or develop the pastry gluten film which is sought in the production of bread dough.  A typical bread dough would have a gluten content of 6.7% based on the weight of the dough; whereas a typical pastry dough, such as may be used in this invention, will have a gluten (protein) content of less than 6%, preferably less than 5%, based on the weight of the dough.

The less than fully developed pastry doughs of this invention are characterized by the fact that the pastry dough is mixed only to "pick-up" or at

0145367

-12-

most "clean-up" such that full development of the dough as is effected in the preparation of bread doughs, is not permitted to occur.

It is unexpected therefore that pastry dough, wherein an underdeveloped gluten structure is called upon to support a rich or dense dough, would retain its proofed volume through freezing, frozen storage and baking. The stages of dough development during mixing are well standardized and known in the baking art and are more fully described by E.J. Pyler in <u>Baking Science and Technology</u> (Sibel Publishing Co., Chicago, Ill., 1979) at pages 596 to 608 which are hereby incorporated by reference. Briefly however, "pick-up" is the stage of mixing where the dry and wet materials have mixed only to the point of combining together, with the dough mass being wet, rough and uneven and with the gluten structure begining to gorm. In the "clean-up" phase the dough becomes drier and more elastic and begins to form into a more cohesive mass which is both stiff and wet in spots. The point, during mixing, at which the dough cleans away from the back of the mixer bowl constitutes the end of the "clean-up" period or stage. From this point on, the dough enters the final "development" stage during which the dough mass transforms from having a dull, somewhat rough appearance to having as smooth, satiny sheen. The dough can be stretched into a semi-transparent membrane of essentially uniform thickness without rupturing. Prior to dough development, the stretched dough membrane exhibits strands or lumps and ruptures more readily.

## BEST MODE FOR CARRYING OUT THE INVENTION

This invention is further described but not limited to the following examples:

0145367

-13-

EXAMPLE 1 - Croissant (Sponge Process)

| Dough Formulation | Baker's % |
|---|---|
| Flour (11.5% protein) | 100% |
| Compressed yeast | 5 |
| Sugar | 6 |
| Vegetable shortening | 5 |
| Nonfat dry milk | 3 |
| Salt | 1.8 |
| Water | 60 |
| Ascorbic Acid | 0.01 |
| Unsalted butter as roll-in | 50 |

The dough sponge was prepared by mixing 40% of the total flour, 45% of the total water, the gluten, yeast and ascorbic acid and fermenting the mix at 75% for 3 to 4 hours. The remaining ingredients (water at 45°F (7.2°C)) were added and mixed in a standard dough mixer only to "pick-up". The dough was then allowed to rest for 5 minutes, sheeted to approximately 10 mm and all the butter was added as the roll-in in accordance with the previously described folded-thirds process. The folded dough was rested for 15 to 20 minutes in a retarder at 35-40°F (1.7 - 4.4°C). The dough was sheeted, folded and rested as above two more times, then sheeted and folded again and finally sheeted to 3 mm and cut into individual triangles of about 2 ounces (56 grams) each. These triangles were rolled to form croissants, proofed at 90°F (32.2°C) and 80% R.H. until a volume increase of about 60% was obtained. The croissants were then placed in a -25°F bast freezer for one hour and stored at 0°F (-17.7°C). After 3 months storage at -17.7°C the croissants

0145367

-14-

were removed from the storage, placed directly into a oven preheated to 375°F and baked for 25 minutes. The resulting baked croissants possessed an excellent fresh-baked aroma, flavor and texture.

EXAMPLE 2 - Almond Croissant (Short Time Process)

| Dough Formulation | Baker's % |
|---|---|
| Flour (11.5% protein) | 100% |
| Compressed yeast | 5.0 |
| Sugar | 6.0 |
| Vegetable shortening | 5.0 |
| Whole Milk | 70 |
| Salt | 1.8 |
| L-Cysteine | 30 ppm |
| Potassium Bromate | 35 ppm |
| Ascorbic Acid | 80 ppm |
| Unsalted butter as roll-in | 50 |

All of the dough ingredients (except roll-in) were mixed in a standard dough mixer just to "clean-up". The dough was rested at room temperature for 15 minutes, sheeted to 10 mm, combined with roll-in and folded as in Example 1. The dough was then rested (as in Example 1), sheeted and folded four times with almond paste at a level of 15% by weight of the dough being coated onto the sheeted dough prior to the fourth folding operation. The dough was then sheeted to 3 mm, cut, rolled, proofed, frozen, stored and baked as in Example 1. The baked product possessed excellent quality.

EXAMPLE 3 - Sweet Dough Buns

| Dough Formulation | Baker's % |
|---|---|
| Flour (12.5% protein) | 100.00 |
| Water | 61.00 |
| Conditioner* | 25.00 |
| Compressed Yeast | 10.00 |
| Sugar | 10.00 |
| Shortening | 6.00 |
| Dry Egg Yolk | 3.00 |
| Emulsifier | 1.00 |
| Yeast Food | 0.50 |
| Emplex (sodium stearyol lactylate) | 0.25 |
| Flavors | 1.85 |

* Contains L-Cystine, Potassium Bromate and Ascorbic Acid.

The yeast was hydrated with a portion of the water (2:3 weight ratio) and creamed together with the conditioner, sugar, shortening, egg yolk, emulsifier, yeast food, Emplex and flavors for four minutes using a low speed. The remaining ingredients were then added and low-speed mixing continued for one minute, followed by higher speed mixing for five minutes at which point the pick-up phase was completed. The dough temperature was then about 65°F. The dough was then sheeted to about 12 mm, folded in thirds and then turned 90°, sheeted and folded two times. The dough was next retarded at 40°F (4.4°C) for 4 to 6 hours, sheeted as before, coated on one half with a cinnamon-butter cream filling as (1 part filling to 9 parts dough) and folded in half. The folded dough was then sheeted to about 7 mm, cut into 17.8 cm strips, rolled into a tight cylinder and cut into 42.5 g pieces which were coated with an egg wash. The piece were proofed at 95°F (35°C) and 75% R.H. for about 40 minutes and increase in volume of about 65%. The proofed pieces were then static-frozen and stored at 0°F. After about 30 days frozen storage the frozen pieces were removed from the freezer and immediately baked at 375°F (190°C) for 35-40 minutes. A positive oven-spring was observed as a result of baking and the baked product had an excellent fresh-baked taste, texture and aroma.

### EXAMPLE 4 - Sweet Dough (Twist)

| Dough Formulation | Baker's % |
|---|---|
| Flour (12.5% protein) | 100.00 |
| Water | 61.00 |
| Shortening | 12.00 |
| Sugar | 10.00 |
| Compressed yeast | 10.00 |
| Dextrose | 8.00 |
| Dry egg yolk | 8.00 |
| Soy flour | 2.00 |
| Salt | 1.50 |
| Nonfat dry milk | 1.00 |
| Emulsifiers | 1.00 |
| Yeast food | 0.50 |
| Emplex (SSL) | 0.25 |
| Flavors | 1.85 |

The yeast is hydrated as in Example 3 and then creamed together with the shortening, sugar, dextrose, egg yolk, soy flour, salt, NFDM, emulsifiers, yeast food, Exmplex and flavors as in Example 3. Likewise as in Example 3, the remaining ingredients are added, the dough is sheeted, turned and folded, retarded, sheeted, coated with the cinnamon-butter cream filling, folded and sheeted again. The sheeted dough was then cut into rectangles 6.5 x 5.25 inches (16.5 x 13.3 cm) and then into four equal strips each of which was twisted and coated with an egg wash, proofed, frozen and stored as in Example 3. After 28 days storage, the frozen twists were removed from the freezer, filling and topping was added, and then they were baked at 375°F for 45 minutes. Again a positive oven-spring and excellent eating qualities were obtained.

### EXAMPLE 5 - Danish Snail

| Dough Formulation | Baker's % |
|---|---|
| Flour (11.5% protein) | 100 |
| Sugar | 20.4 |
| Salt | 1.5 |
| Nonfat Dry Milk | 5.2 |
| Compressed Yeast | 5.0 |
| Butter | 10.3 |
| Whole Eggs | 20.4 |
| Vanilla Extract | 0.09 |
| Spices | 0.04 |
| Emulsifiers | 4.00 |
| Water | 41.00 |
| Roll-in (butter) | 50 |

The yeast was hydrated as in Example 3 and mixed with remaining ingredients first for one minute at low speed and then for 5 minutes at medium- high speed.  The dough showed no signs of gluten development and was at 50 to 65°F (15.5 to 18.3°C). The dough was allowed to rest for five minutes, then sheeted to 10 mm, coated with the roll-in and folded in thirds.  The dough was then retarded at 35 to 40°F for 15 to 20 minutes, sheeted and folded three times.  Then was again retarded, sheeted, coated with the filling, folded, sheeted, cut into strips and rolled as in Example 3.  The rolls were cut into 2.5 ounce (70.2 g) piece and coated with egg wash. These pieces were then proofed at 85°F (29.4°C) and 60% R.H. for about 40 minutes during which volume increased about 65%.  The pieces were static frozen and baked as in Example 3.  A positive oven spring and an excellent quality fresh baked good was obtained.

EXAMPLE 6 - Short Pastry

| Dough Formulation | Baker's % |
| --- | --- |
| Flour (12% protein) | 100.00 |
| Shortening | 10.00 |
| Sugar | 5.00 |
| Active Dry Yeast | 3.00 |
| Salt | 1.50 |
| Honey | 1.25 |
| Nonfat Dry Milk | 1.00 |
| Emulsifiers | 0.50 |
| Water | 60.00 |
| Roll-in (Margarine) | 30.00 |

All of the dough ingredients were mixed together to the "clean-up" stage.  The dough was allowed to rest at room temperature for 15 minutes, sheeted to about 10 mm, combined with the roll-in margarine and folded in thirds. The dough is then rested at 35-40°F for 15 to 20 minutes, sheeted to 10 mm and folded into thirds four times. The dough was then given a final sheeting to 3 mm, cut into triangles, coated with fruit jam (9:1 dough to jam) on one half of top surface, folded and edges crimped. Decorative slits were placed in the top surface and an egg wash coating was applied. The pastries were then frozen for one hour in a -25°F (-31.6°C) blast freezer and stored at 0°F (-17.7°C). After 4 months storage, the pastries were removed from the freezer and placed directly in a 375°F oven and baked for between 20 and 25 minutes. The resulting products were of excellent quality and possessed a short, flaky texture.

Having thus described the invention what is claimed is:

## CLAIMS

1.   A process for making a proofed, frozen pastry product which can be baked directly from the freezer without effecting any additional proofing said process comprised of:

(a)   preparing a dough containing water, sugar, wheat flour, yeast and fat, said dough containing less than 16% by weight (flour basis) of wheat protein;

(b)   mixing the dough to a point of less than full development;

(c)   fermenting said dough or said dough ingredients for a period of at least 30 minutes;

(d)   sheeting and cutting the fermented dough into desired form;

(e)   rolling or folding the sheeted dough into desired pastry product shape;

(f)   proofing the shaped pastry products at a temperature of from 80° to 105°F, a relative humidity of at least 60% and for at least 20 minutes, the combined fermentation and proofing times exceeding two hours and the proofing time being sufficient to achieve a volume increase of at least 55% over the volume of the shaped, unproofed pastry product; and

(g)   slowly freezing the proofed pastry products to a core temperature of 13.5°F or less.

2.   The process of claim 1 wherein the frozen pastry product is stored at a temperature between 0°F (-17.7°C) and -40°F (-40°C).

3. The process of claim 2 which further includes the steps of removing the frozen pastry product from frozen storage and baking the product without an intervening proofing step.

4. The process of claim 1 wherein the proofed pastry product of step (a) contains on a baker's percent basis, from 15 to 65% fat, whole egg (liquid) from 5 to 25%, non-fat milk solids from 4 to 12% and sugar from 3 to 25%.

5. The process of claim 1 wherein the dough has a wheat protein level of from 11.5% to 14.5%.

6. The process of claim 1 wherein the dough of step (a) has a fat content of from 15 to 25% (baker's percent), the fermented dough is sheeted at least two times and the dough is proofed to a specific volume of from about 1.43 to 2.17cc/gram.

7. The process of claim 1 wherein the dough of step (a) has a fat content of from 5 to 20% (baker's percent), the fermented dough is sheeted at least two times and an additional 15 to 50% fat is coated onto the surface of the sheeted dough and the dough is proofed to a specific volume of from about 1.26 to 2.72 cc/gm.

8. The process of claim 1 wherein the dough of step (c) has a fat content of less than 5% (baker's percent). The fermented dough is sheeted at least two times and from 40 to 60% fat is coated onto the surface of the sheeted dough and the dough is proofed to a specific volume of from about 1.82 to 3.57 cc/gm.

9. The process of claim 1 wherein the proofed pastry is frozen to a core temperature of 30°F during a period of at least 30 minutes.

10. The process of claim 1 wherein the proofed pastry is frozen in a freezer which has an ambient temperature of from -40°F to 0°F.

0145367

-22-

11.    The process of claim 10 wherein the core temperature of the proofed pastry is reduced to 10°F within two hours.

12.    The process of claim 1 wherein the proofed dough has a gluten content of less than 6% by weight of the dough.

13.    The process of claim 1 wherein the dough is mixed only to the "pick-up" stage.

14.    The process of claim 1 wherein ambient temperature with the freezer is from -40°C to -17.7°C.